# EUROPÄISCHE PATENTANMELDUNG

(11) **EP 0 882 416 A2**
(43) Veröffentlichungstag der Anmeldung: **09.12.1998**
(21) Anmeldenummer: 98110188.4
(22) Anmeldetag: 04.06.1998
(51) Int. Cl.: A47B 47/02, F16B 12/50

(54) **Tragkonstruktion**

(30) Priorität: 05.06.1997 DE 29709829 U
(71) Anmelder: Christmann & Pfeifer GmbH & Co. KG, 35233 Breidenbach (DE)
(72) Erfinder: Schulz, Joachim, 99947 Bad Langensalza (DE); Baron, Klaus, 35236 Wolzhausen (DE); Donges, Matthias, 35216 Biedenkopf (DE)
(74) Vertreter: Olbricht, Karl Heinrich, Dipl.-Phys.

(57) **Zusammenfassung**

Eine Tragkonstruktion 10 insbesondere für Stahlmöbel hat zwei gleichartige Rahmen (17) für Sockel- und Deckplatten (12; 16) und dazwischen angeordnete Pfosten (14), an denen Quer- und Hochelemente wie Einlegeböden (40), Auszüge (42) bzw. Schubladen (44), Wandteile (46, 48), Fronten bzw. Türen (50) u.dgl. anbringbar sind. Am Rahmen-Umfang sind mit Pfosten (14) verbindbare Stützadapter (20) einfügbar. Ein von einem C- oder ⊏-Profil oder von einem Rohr (19) gebildeter Hohl- oder Falzrand (18) ist mit Kehlen (28) versehen, die zur Rahmenmitte hin offen und der Außengestalt der Stützadapter (20) angepaßt sind. Der im Inneren durch Versteifungen (24) in wenigstens zwei Kammern (25) unterteilte Stützadapter (20) kann an gegenüberliegenden Randteilen (22) Einlaufkanten (29) haben. Separate Außen- oder Randteile (22) können im Eckbereich eingeklebt werden und Adapter-Innenteile (23) aufnehmend haltern. An diesen oder an einem unteren Schenke des Falzrandes (18) sind Standfüße (30) oder Rollen (33) verankerbar. Jeder Pfosten (14) kann Führungen (34) für wenigstens ein höhenverstellbares Einschubteil (35) haben, das Bohrungen, Kerben, Rasten (36) o.dgl. für Aufnahme-Elemente (38) besitzt. In der Außenfläche (56) nimmt eine Profilnut (58) eine Leiste (60) auf, die ein Führungsprofil (62) für ein Einschubteil (35) hat.

## Beschreibung

Die vorliegende Erfindung betrifft eine Tragkonstruktion gemäß dem Oberbegriff von Anspruch 1. Sie eignet sich als Gerüst für Möbel, insbesondere für Stahlblech-Möbelsysteme.

Derartige Möbel müssen vielfältige Gebrauchseigenschaften besitzen. Es sind nicht nur ganz unterschiedliche Einsatzbedingungen, Aufstellorte sowie entsprechend verschiedene Form- und Maß-Anforderungen zu berücksichtigen, sondern man muß auch konstruktive Vorkehrungen z.B. für verstellbare Inneneinrichtungen und Türanbindungen treffen.

Außerdem erfordern Transport und Nutzung grundsätzlich hohe Stabilität. Herkömmlich werden Stahlblechmöbel oft starr gefügt, beispielsweise durch Punkt- oder Schutzgasschweißen. Solche Fertigprodukte müssen sowohl in der Fertigung als auch bei der Auslieferung als Ganzes transportiert werden, was wegen des großen Volumens umständlich sein kann und großen Aufwand - auch für Schutzmaßnahmen - verursacht. Zerlegbare Möbel andererseits sind nach der Montage nicht annähernd gleich stabil, da vor allem ihre Gestaltfestigkeit allgemein nur einen Bruchteil derjenigen von Komplettmöbeln erreicht.

Ein wichtiges Ziel der Erfindung besteht darin, eine Tragkonstruktion für Möbel zu schaffen, die wirtschaftlich herstellbar sowie in Einzelteilen transportierbar ist.

Damit wird ferner die Möglichkeit eines stabilen Möbel-Aufbaues vor Ort angestrebt, ohne daß Wandelemente wie Seiten- und Rückwände oder Türen eine statische Funktion übernehmen müßten.

Hauptmerkmale der Erfindung sind in Anspruch 1 angegeben. Ausgestaltungen sind Gegenstand der Ansprüche 2 bis 14.

Eine Tragkonstruktion insbesondere für Stahlmöbel mit zwei untereinander gleichartigen Rahmen für Sockel- und Deckplatten sowie dazwischen angeordneten Pfosten, an denen Quer- und Hochelemente wie Einlegeböden, Auszüge bzw. Schubladen, Wandteile, Fronten bzw. Türen u. dgl. anbringbar sind, wobei zur Bodenabstützung Stellsockel, Standfüße oder Rollen vorgesehen sind, zeichnet sich laut Anspruch 1 erfindungsgemäß dadurch aus, daß der Rahmen am Umfang einen Hohl- oder Falzrand aufweist, in den eine Anzahl jeweils mit wenigstens einem Pfosten verbindbarer Stützadapter form- und/oder stoffschlüssig einfügbar sind. Eine solche Tragkonstruktion bildet ein leicht montierbares und verwindungssteifes Grundgerüst, das die statischen und dynamischen Belastungen während des Transports und unter Gebrauchsbedingungen zuverlässig aufnimmt. Dazu sind keine zusätzlichen Verstrebungs- oder Spannelemente erforderlich, weil die Belastung über Umfangs-Angriffspunkte am Kopf- und Fußteil aufgenommen wird. Dadurch wird eine hohe Gesamt-Festigkeit erzielt, und vor allem an den Extrembelastungsstellen kann die Festigkeit gegenüber konventionell gefertigten Möbeln ohne weiteres um den Faktor 2 bis 3 erhöht werden.

Anspruch 2 sieht vor, daß der Hohl- oder Falzrand von einem C- oder ⊏-Profil gebildet ist. Man kann sich also gängiger Bauelemente bedienen, um den sicheren Einbau von Stützadaptern zur Pfosten-Festlegung mit einfachen Mitteln zu gewährleisten. Dabei ist es günstig, wenn nach Anspruch 3 der Hohl- oder Falzrand von einem mit dem Rahmen einstückigen Rohr gebildet und mit kehlenartigen Teil-Ausschnitten versehen ist, die nach innen, d. h. zur Rahmenmitte hin offen und der Außengestalt der Stützadapter formgleich oder zumindest teilweise angepaßt sind. Dank dieser Merkmale erzielt man auf überaus wirtschaftliche Weise eine außerordentlich hohe Gestaltfestigkeit.

Gemäß Anspruch 4 können die Stützadapter Rund- oder Mehreck-Körper sein, wobei das Stützadapter-Innere durch Versteifungen in wenigsten zwei Kammern unterteilt ist. Durch solche Stützadapter werden angreifende Punktlasten flächig verteilt, und gerade der sonst bei Stahlblechmöbeln sehr kritische Bereich der Ecken wird besonders verstärkt. Dazu tragen die Versteifungen im Stützadapter-Inneren bei, die nach Anspruch 5 untereinander und/oder mit den Stützadapter-Randteilen an Knotenrohren fest verbunden sind, die in vorgegebenen Abständen angeordnete, parallele Schraub-Stützpunkte bilden. Hierdurch wird zugleich die Montage stark erleichtert.

Rund-Körper kommen für runde Rahmen in Betracht, die z. B. für säulenförmige Tragkonstruktionen, ovale oder kreisrunde Tische u. dgl. vorteilhaft sind. Mehreck-Körper eignen sich besonders für Kastenmöbel, Regale u. dgl., wobei laut Anspruch 6 zumindest der Rahmen - zweckmäßig aber auch die mit ihm verbundene Platte - mehreckige, z. B. quadratische Form hat und wobei die Stützadapter in die Teil-Ausschnitte des Hohl- oder Falzrandes einpaßbar sind.

Für die Anbringung des Stützadapters ist es günstig, wenn er nach Anspruch 7 an zwei gegenüberliegenden Randteilen abgeflacht, insbesondere in gleichem Winkel wie die Teilausschnitte angeschrägt ist, wobei letztere Einlaufkanten für die Randteile aufweisen oder bilden. Dadurch ist ein bequemes Einführen des Stützadapters sichergestellt, dessen Führung in den Teil-Ausschnitten einen weiteren Beitrag zu erhöhter Stabilität leistet.

Beispielsweise bei Labormöbeln gibt es Anforderungen, die großflächige Ausbrüche in den Rahmen bedingen, etwa für das Montieren von Spülbecken. Insbesondere hierzu eignen sich zweiteilige Stützadapter nach Anspruch 8, wobei an oder in dem Hohl- bzw. Falzgrand ein Außenteil vormontiert ist, an dem ein Innenteil mittels Spannstiften, Schrauben o.dgl. festgelegt werden kann.

Bevorzugt sind die Stützadapter gemäß Anspruch 9 Aluminium-Stranggußteile, d. h. Elemente hoher Festigkeit, an denen die Pfosten zuverlässig festlegbar sind und deren Länge es auf einfache Weise ermöglicht, durch passende Bemessung vorgegebene statische und dynamische Belastungen aufzunehmen, und zwar ohne daß zusätzliche Bauteile- oder Formenkosten entstehen.

Eine schnelle Montage kann ferner unterstützt werden, indem die Stützadapter nach Anspruch 10 mit dem Hohl- oder Falzrand verrastbar sind, was die sichere Plazierung zur form- bzw. stoffschlüssigen Befestigung unterstützt.

Die Weiterbildung von Anspruch 11 sieht vor, daß die Standfüße oder Rollen an den Stützadaptern und/oder an dem Rahmen verankerbar sind, namentlich an einem unteren Schenke des Hohl- oder Falzrandes. Das ermöglicht eine schnelle und zuverlässige Befestigung.

Gemäß Anspruch 12 kann jeder Pfosten Führungen für wenigstens ein Einschubteil aufweisen, das insbesondere höhenverstellbar und mit Bohrungen, Kerben, Rasten o. dgl. für Aufnahme-Elemente versehen ist. Die Inneneinrichtung der Möbel kann dadurch den verschiedensten Bedürfnissen in einfacher Weise angepaßt werden. Um vorhandenen Raum optimal zu nutzen, kann man aber auch z.B. zwischen Möbeln, die in einem Abstand parallel nebeneinander stehen, Einschubteile verwenden und in Aufnahmen von Seitenwänden Regalböden haltern.

Zu hoher Gesamtfestigkeit der Konstruktion trägt es ferner bei, wenn die Pfosten gemäß Anspruch 13 profilierte Aluminium-Stranggußteile mit Einzügen, Längsbohrungen u. dgl. sind. Während letztere z. B. für die Verankerung an den Stützadaptern dienen können, sind die Einzüge zur variablen Festlegung von Schraubbefestigungen geeignet, welche die passende Höheneinstellung für Einlegeböden und andere Halterungen gestatten. Eine im wesentlichen glatte Außenfläche der Pfosten trägt nicht nur zu gutem Aussehen bei, sondern erlaubt auch den flächigen Anschluß von nebeneinander angeordneten Möbeln.

Gemäß Anspruch 14 ist in der Außenfläche eine Profilnut zur Aufnahme einer Leiste vorhanden, die ein mit einem einspringenden Pfostenrand korrespondierendes Führungsprofil für ein Einschubteil aufweist, so daß an diesem Teil der Außenfläche ebenfalls variable Einstellungen vorgenommen werden können, und zwar in der gleichen Ebene.

Weitere Merkmale, Einzelheiten und Vorteile ergeben sich aus dem Wortlaut der Ansprüche sowie aus der folgenden Erläuterung von Ausführungsbeispielen anhand der Zeichnung. Darin zeigen:
- Fig. 1: eine Schrägansicht der Hauptbestandteile einer Tragkonstruktion von unten,
- Fig. 2: eine auseinandergezogene Schrägansicht von Teilen einer (unfertigen) Tragkonstruktion,
- Fig. 3: eine Schrägansicht eines Stützadapters und eines Rahmenecks,
- Fig. 4a: eine auseinandergezogene Schrägansicht eines Rahmenecks mit Stützadapter und Standfuß,
- Fig. 4b: eine auseinandergezogene Schrägansicht eines Rahmenecks und einer Rolle,
- Fig. 5a: eine Schrägansicht eines Stützadapters vor dem Einbau in ein Rahmeneck,
- Fig. 5b: eine Schrägansicht des eingebauten Stützadapters von Fig. 5a,
- Fig. 6a: eine Draufsicht auf ein Rahmeneck mit zweiteiligem Stützadapter vor der Montage,
- Fig. 6b und 6c: je eine Teil-Schrägansicht eines Rahmens mit befestigtem Adapter-Außenteil und zu montierenden Innenteil mit Fuß bzw. Rolle,
- Fig. 7: eine Draufsicht auf einen anderen Stützadapter,
- Fig. 8: eine Stirnansicht eines Pfostens und
- Fig. 9: eine Frontansicht verschiedener Möbel.

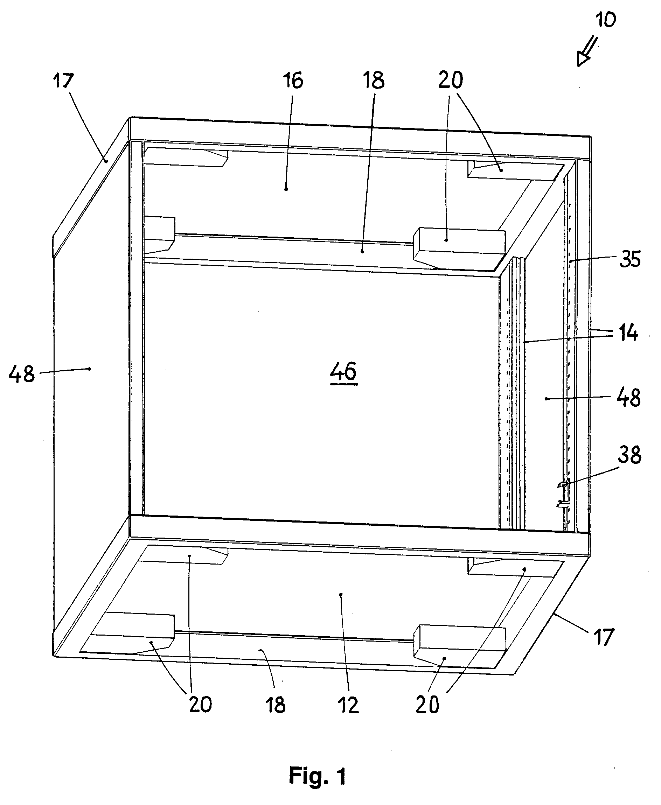

Man erkennt in Fig. 1 Hauptbestandteile einer Tragkonstruktion 10 in der Schrägansicht von unten. Sie besteht aus zwei gleichartigen Rahmen 17, die unten mit einer Sockelplatte 12 und oben mit einer Deckplatte 16 versehen sind. Die beiden Rahmen 17 sind durch Pfosten 14 miteinander verbunden, und zwar an den Ecken, wo in einem Hohl- bzw. Falzrand 18 der Rahmen 17 jeweils Stützadapter 20 befestigt sind. Außen sind eine Rückwand 46 sowie Seitenwände 48 angebracht. In den Pfosten 14 befinden sich Einschubteile 35, an denen Aufnahmen 38 z. B. für (nicht dargestellte) Einlegeböden angebracht werden können.

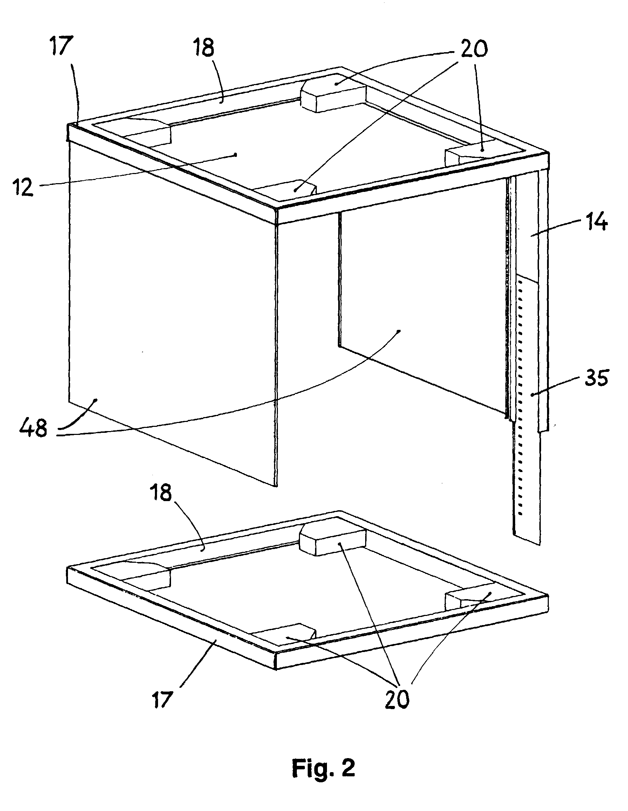

Zur Veranschaulichung des Zusammenbaues zeigt Fig. 2 eine auf den Kopf gestellte Anordnung in einem Vormontage-Abschnitt. Man sieht, daß ein Einschubteil 35 an einem bereits montierten Pfosten 14 austauschbar eingeführt werden kann. Während bodenseitig (in Fig. 2 oben) bereits eine Sockelplatte 18 vorhanden ist und an den Seiten Wandplatten 48 erkennbar sind, fehlen noch Front- und Rückwände sowie eine Deckplatte am unteren Rahmen 17.

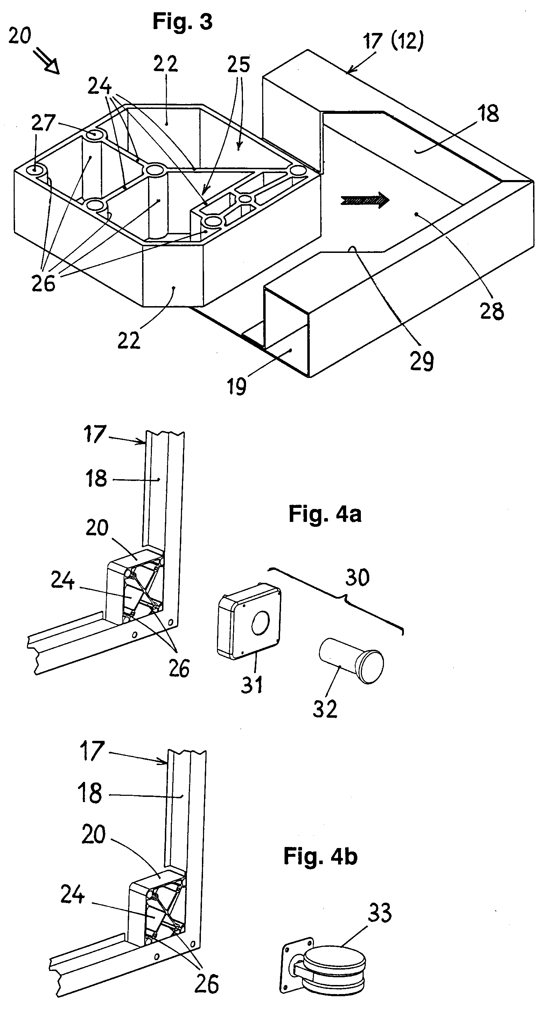

Fig. 3 veranschaulicht, wie das Einfügen eines Stütsadapters 20 in den Hohl- bzw. Falzrand 18 eines Rahmens 17 erfolgt. Dieser ist im gezeichneten Beispiel von einem Vierkant-Rohr 19 gebildet und an den Ecken mit Teil-Ausschnitten 28 versehen, die jeweils parallele, zur Ecke hinführende Einlaufkanten 29 aufweisen. Der blockförmige Stützadapter 20 hat Randteile 22, die ebenfalls parallel an gegenüberliegenden Teilen des Adapters in solchem Abstand vorgesehen sind, daß beim Einschieben in Pfeilrichtung eine zügige Führung und Einpassung des Stützadapters 20 in das Rahmeneck gewährleistet wird.

Der Stützadapter 20 kann massiv ausgebildet sein, doch ist es schon aus Gründen der Gewichtsersparnis zweckmäßig und bevorzugt, ihn als Hohlkörper zu gestalten. Die in Fig. 3 gezeichnete Bauform hat innere Versteifungen 24 zur Bildung mehrerer Kammern 25, wobei die Versteifungs-Wände zumindest an ausgewählten Stellen mit Knotenrohren 26 fest verbunden sind, die zugleich Schraublöcher 27 bilden. Deren Anordnung ist so getroffen, daß die Verbindung mit wenigstens einem zugeordneten Pfosten 14 problemlos möglich ist, z.B. mittels (nicht gezeichneten) Dübeln und Senkkopfschrauben.

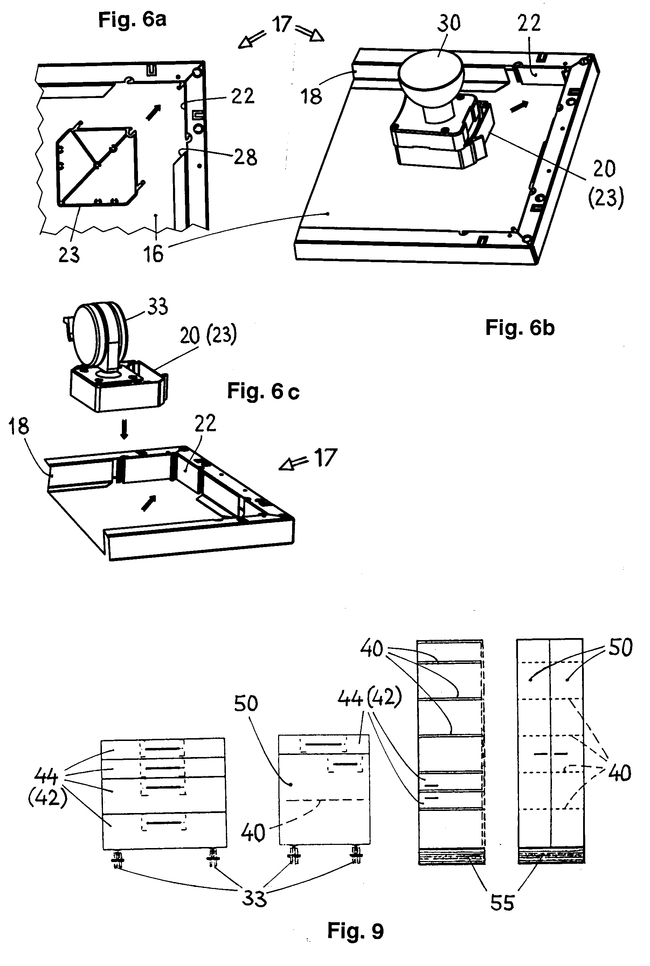

In Fig. 4a und 4b ist eine andere Bauform eines Stützadapters 20 im bereits befestigten Zustand gezeichnet. Man erkennt, daß die auch hier bevorzugt als hohle Aluminium-Stranggußteile gefertigten Stützadapter 20 eine andere Kammeraufteilung durch Versteifungen 24 haben, die sich in diesem Falle diagonal kreuzen. Dargestellt sind jeweils sockelseitige Rahmenecken, an denen entweder ein Standfuß 30 mit einer Fußhalterung 31 und einem Fußrohr 32 (Fig. 4a) oder eine Fußrolle 33 (Fig. 4b) befestigt werden kann. Nicht gezeichnet ist die Befestigung eines Stellsockels 55, der in an sich bekannter Weise zumindest an der Vorderseite einer Tragkonstruktion 10 einspringend montierbar ist (vergl. Fig. 9).

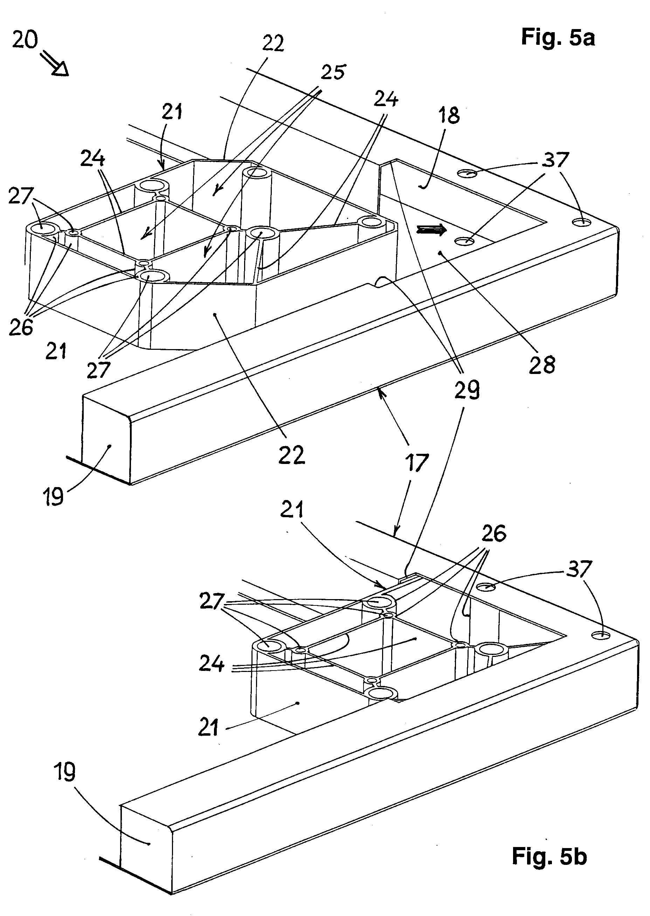

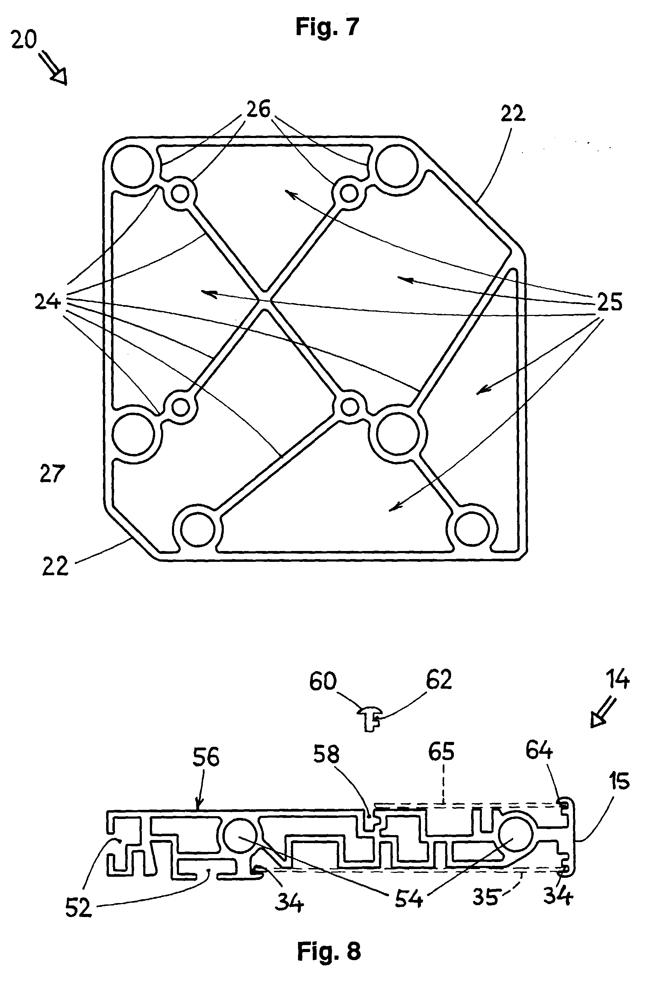

Eine weitere Bauform eines Stützadapters 20 ist aus Fig. 5a und 5b ersichtlich, und zwar in Fig. 5a vor dem Einbau in einen Teil-Ausschnitt 28 eines Rahmens 17 und in Fig. 5b danach, d. h. im montierten Zustand. Hierbei sind gegenüber der vorbeschriebenen Gestaltung Versteifungen 24 in anderer Anordnung und Geometrie vorgesehen, so daß auch andere Kammern 25 gebildet sind. Man erkennt ferner, daß die Einlaufkanten 29 hier zur Führung und Einpassung von Seitenflächen 21 des Stützadapters 20 dienen können. Die Schraublöcher 27 einiger Knotenrohre 26 sind so angeordnet, daß sie im Einhauzustand mit Bohrungen 37 des Rahmens 17 fluchten. Dadurch ist es auf einfache Weise möglich, eine der Platten 12 bzw. 16 oder auch eine Fußhalterung 31 bzw. den Flansch einer Rolle 33 durch den Rahmen 17 hindurch am Stützadapter 20 zu verankern.

Für gewisse Anwendungen ist es zweckmäßig, wenn die Stützadapter 20 zweiteilig sind, wie in Fig. 6a bis 6c veranschaulicht. Hierbei bildet der Randteil 22 einen für sich montierbaren Adapter-Außenteil, der im Eckbereich eines Rahmens 17 in seinen Hohl- bzw. Falzrand 18 eingeklebt werden kann. Der Rahmen 17 kann in dem auf diese Weise bereits versteiften Ausschnitt 28 einen Adapter-Innenteil 23 aufnehmen, wobei dessen Gestaltung sich noch in der Schlußphase eines Möbel-Aufbaues wählen läßt. Je nach dem benötigten Modul kann der Innenteil 23 etwa gemäß Fig. 6b einen Fuß 30 oder gemäß Fig. 6c eine Rolle 33 tragen. Er wird in der Endmontage wie oben beschrieben befestigt, bevorzugt mittels Spannstiften oder Schrauben. In Sonderfällen - z.B. bei Labormöbeln - ist es auch möglich, den Innenteil 23 wegzulassen, um trotz vorgegebener Gesamtmaße noch Platz zu gewinnen, namentlich für den Einbau eines Spülbeckens oder bei Hängeschränken.

Eine weitere Kammer-Aufteilung eines Stützadapters 20 eines anderen Typs ist in Fig. 7 veranschaulicht. Man erkennt, daß - wie auch in Fig. 5a und 5b - Knotenrohre 26 größeren und kleineren Durchmessers nebeneinander vorhanden sein können, wobei die Ausführungsform von Fig. 7 wiederum sich kreuzende Versteifungen 24 vorsieht, die in diesem Beispiel an den kleineren Knotenrohren 26 angreifen bzw. enden.

Zumindest zwei Knotenrohre 26 sind an den - vorzugsweise symmetrisch gestalteten - Stützadaptern 20 in solchem Abstand vorgesehen, daß sie mit Längsbohrungen 54 fluchten können. Wie man aus Fig. 8 ersieht, haben die Pfosten 14 bevorzugt an einer Schmalseite Nuten-Einzüge 52 für (nicht dargestellte) Schraubbefestigungen und ferner einen Pfostenrand 15 mit einem Profil, das einem Gegenprofil einer Leiste 60 entspricht, welche (in Längsrichtung) in eine Profilnut 58 einschiebbar ist. Dadurch hat man die Möglichkeit, auch an der sonst glatten Außenfläche 56 ein weiteres Einschuhteil 65 entlang Führungen 62, 64 in gleicher Weise einzuschieben, wie das an der Innenseite entlang den Führungen 34 für das (breitere) Einschuhteil 35 möglich ist.

Beispiele aus einer Vielzahl kostengünstig realisierbarer Möbel sind in Fig. 7 nebeneinander gezeichnet. Man erkennt links ein auf Rollen 33 stehendes Kastenmöbel mit verschieden hohen Schubladen 44. Daneben, in der Mitte, ist ein Kastenmöbel mit einer Tür 50, einem gestrichelt angedeuteten Einlegehoden 40 und einer Schublade 44 (oder einem Auszug 42) dargestellt, das ebenfalls auf Rollen 33 steht. Die beiden rechts abgebildeten Möbelelemente ruhen jeweils auf einem Stellsockel 39, wobei ganz nach Wahl eines Bestellers Einlegeböden 40 sowie Schubladen 44 für Regale oder auch Türen 50 für ein Schrankmöbel mit Einlegeböden 40 vorgesehen sein können. Zahlreiche weitere Varianten sind möglich.

Die Erfindung ist nicht auf die beschriebenen Ausführungsformen beschränkt, sondern in vielfältiger Weise abwandelbar. So lassen sich definierte Abmessungen und Höhenraster ohne weiteres einhalten, doch müssen die Sockel- und/oder Deckplatten 12; 16 nicht unbedingt mit den Rahmen 17 bündig abschließen, sondern sie können für bestimmte Möbel in vorgegebener Form und Größe überstehen. Die Pfosten 14 können auch mit anderen als den dargestellten Profilen versehen sein, z. B. zu dekorativen Zwecken, denen auch Einschubteile mit ausgewählter Farbgebung, Aufdrucken u. dgl. dienen können.

Man erkennt aber, daß eine bevorzugte Ausbildung der Erfindung insbesondere für Stahmöbelsysteme eine Tragkonstruktion 10 mit zwei untereinander gleichartigen Rahmen 17 für Sockel- und Deckplatten 12; 16 vorsieht, zwischen denen Pfosten 14 angeordnet sind. Bodenseitig sind Stellsockel 55, Standfüße 30 oder Rollen 33 befestigbar. Jeder Rahmen 17 hat am Umfang einen Hohl- oder Falzrand 18, der von einem C- oder ⊏-Profil gebildet ist und in den eine Anzahl jeweils mit wenigstens einem Pfosten 14 verbindbarer Stützadapter 20 form- und/oder stoffschlüssig einfügbar sind. Der Falzrand 18 kann von einem mit dem Rahmen 17 einstückigen Rohr 19 gebildet und mit kehlenartigen Teil-Ausschnitten (28) versehen sein, die nach innen offen und der Außengestalt der Stützadapter 20 formgleich oder -ähnlich sind.

Letztere sind vorteilhaft mit inneren Versteifungen 24 versehene, ein- oder mehrteilige Rund- oder Mehreck-Körper mit Einlaufflächen 22 zum formschlüssigen Einpassen in die Einlaufkanten 29 aufweisenden Teil-Ausschnitte 28. Das Stützadapter-Innere ist zweckmäßig in wenigstens zwei Kammern 25 unterteilt, wobei die Versteifungen 24 untereinander und/oder mit den Stützadapter-Randteilen 22 an parallelen Knotenrohren 26 fest verbunden sind. Diese bilden zugleich Schraublöcher 27 zur Befestigung der Stützadapter 20, welche vorzugsweise Aluminium-Stranggußteile sind und zur leichteren Montage mit dem Falzrand 18 verrastbar sein können. An diesem und/oder an dem Rahmen 17 sind die Stellsockel 55, Standfüße 30 oder Rollen 33 verankerbar, namentlich mit Dübel-Verschraubungen an einem unteren Schenkel des Falzrandes 18.

Die Pfosten 14 sind insbesondere profilierte Aluminium-Stranggußteile mit Einzügen, Längsbohrungen u. dgl. und mit Führungen 34 für wenigstens ein Einschubteil 35, an dem Aufnahme-Elemente 38 anbringbar sind. In einer im wesentlichen glatten Außenfläche können die Pfosten 14 eine Profilnut zur Aufnahme einer Leiste haben, die ein mit einem einspringenden Pfostenrand korrespondierendes Führungsprofil für ein weiteres Einschuhteil 35 aufweist. An den Pfosten 14 und/oder den Rahmen 17 lassen sich Quer- und Hochelemente wie Einlegeböden 40, Auszüge 42 bzw. Schubladen 44, Wandteile 46, 48, Fronten bzw. Türen 50 u. dgl. anbringen. Auch nachträgliche Umbauten und Funktionsänderungen sind problemlos möglich.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Tragkonstruktion
- 12: Sockelplatte
- 14: Pfosten
- 15: Pfostenrand
- 16: Deckplatte
- 17: Rahmen
- 18: Hohl-/Falzrand
- 19: [Vierkant-]Rohr
- 20: Stützadapter
- 21: Seitenflächen
- 22: Randteil / Außenteil
- 23: Innenteil
- 24: Versteifungen
- 25: Kammern
- 26: Knotenrohre
- 27: Schraublöcher
- 28: Teil-Ausschnitte
- 29: Einlaufkanten
- 30: Standfüße
- 31: Fußhalterung
- 32: Fußrohr
- 33: Rollen
- 34: Führungen
- 35: Einschubteil
- 36: Rasten
- 37: Bohrungen
- 38: Aufnahmen
- 40: Einlegeböden
- 42: Auszüge
- 44: Schubladen
- 46: Rückwand
- 48: Seitenwände
- 50: Front/Tür
- 52: Einzüge
- 54: Längsbohrungen
- 55: Stellsockel
- 56: Außenflächen
- 58: Profilnut
- 60: Leiste
- 62: Führungsprofil
- 64: Führungen
- 65: Einschubteil

## Patentansprüche

1. Tragkonstruktion (10) insbesondere für Stahlmöbel mit zwei untereinander gleichartigen Rahmen (17) für Sockel- und Deckplatten (12; 16) sowie dazwischen angeordneten Pfosten (14), an denen Quer- und Hochelemente wie Einlegeböden (40), Auszüge (42) bzw. Schubladen (44), Wandteile (46, 48), Fronten bzw. Türen (50) u.dgl. anbringbar sind, wobei zur Bodenabstützung Stellsockel (55), Standfüße (30) oder Rollen (33) vorgesehen sind, dadurch **gekennzeichnet**, daß der Rahmen (17) am Umfang einen Hohl- oder Falzrand (18) aufweist, in den eine Anzahl jeweils mit wenigstens einem Pfosten (14) verbindbarer Stützadapter (20) form- und/oder stoffschlüssig einfügbar sind.

2. Tragkonstruktion nach Anspruch 1, dadurch **gekennzeichnet**, daß der Hohl- oder Falzrand (18) von einem C- oder ⊏-Profil gebildet ist.

3. Tragkonstruktion nach Anspruch 1 oder 2, dadurch **gekennzeichnet**, daß der Hohl- oder Falzrand (18) von einem mit dem Rahmen (17) einstückigen Rohr (19) gebildet und mit kehlenartigen Teil-Ausschnitten (28) versehen ist, die nach innen, d.h. zur Rahmenmitte hin offen und der Außengestalt der Stützadapter (20) formgleich oder zumindest teilweise angepaßt sind.

4. Tragkonstruktion nach Anspruch 3, dadurch **gekennzeichnet**, daß die Stützadapter (20) Rund- oder Mehreck-Körper sind, wobei das Stützadapter-Innere durch Versteifungen (24) in wenigstens zwei Kammern (25) unterteilt ist.

5. Tragkonstruktion nach Anspruch 4, dadurch **gekennzeichnet**, daß die Versteifungen (24) untereinander und/oder mit den Stützadapter-Randteilen (22) an zu diesen parallelen, in vorgegebenen Abständen angeordneten Knotenrohren (26) fest verbunden sind, welche zugleich Schraublöcher (27) bilden.

6. Tragkonstruktion nach einem der Ansprüche 3 bis 5, dadurch **gekennzeichnet**, daß zumindest der Rahmen (17) mehreckige, z.B. quadratische Form hat und daß die Stützadapter (20) in die Teil-Ausschnitte (28) des Hohl- oder Falzrandes (18) einpaßbar sind.

7. Tragkonstruktion nach Anspruch 6, dadurch **gekennzeichnet**, daß der bzw. jeder Stützadapter (20) an zwei gegenüberliegenden Randteilen (22) abgeflacht, insbesondere in gleichem Winkel wie die Teil-Ausschnitte (28) angeschrägt ist und daß letztere Einlaufkanten (29) für die Randteile (22) aufweisen oder bilden.

8. Tragkonstruktion nach einem der Ansprüche 1 bis 7, **gekennzeichnet** durch zweiteilige Stützadapter (20), wobei an oder in dem Hohl- bzw. Falzrand (18) ein Außenteil (22) vormontierbar ist, an dem ein Innenteil (23) mittels Spannstiften, Schrauben, o.dgl. festlegbar ist.

9. Tragkonstruktion nach einem der Ansprüche 1 bis 8, dadurch **gekennzeichnet**, daß die Stützadapter (20) Aluminium-Stranggußteile sind.

10. Tragkonstruktion nach einem der Ansprüche 1 bis 9, dadurch **gekennzeichnet**, daß die Stützadapter (20) mit dem Hohl- oder Falzrand (18) verrastbar sind.

11. Tragkonstruktion nach einem der Ansprüche 1 bis 10, dadurch **gekennzeichnet**, daß die Standfüße (30) oder Rollen (33) an den Stützadaptern (20) und/oder an dem Rahmen (17) verankerbar sind, namentlich an einem unteren Schenke des Hohl- oder Falzrandes (18).

12. Tragkonstruktion nach einem der Ansprüche 1 bis 11, dadurch **gekennzeichnet**, daß jeder Pfosten (14) Führungen (34) für wenigstens ein Einschubteil (35) aufweist, das insbesondere höhenverstellbar und mit Bohrungen, Kerben, Rasten (36) o.dgl. für Aufnahme-Elemente (38) versehen ist.

13. Tragkonstruktion nach einem der Ansprüche 1 bis 12, dadurch **gekennzeichnet**, daß die Pfosten (14) profilierte Aluminium-Stranggußteile mit Einzügen (52), Längsbohrungen (54) u.dgl. sind.

14. Tragkonstruktion wenigstens nach Anspruch 13, dadurch **gekennzeichnet**, daß in der Außenfläche (56) eine Profilnut (58) zur Aufnahme einer Leiste (60) vorhanden ist, die ein mit einem einspringenden Pfostenrand (15) korrespondierendes Führungsprofil (62) für ein Einschubteil (35) aufweist.
